# EUROPEAN PATENT APPLICATION

(11) **EP 2 380 765 A2**
(43) Date of publication of application: **26.10.2011**
(21) Application number: 11163243.6
(22) Date of filing: 20.04.2011
(51) Int. Cl.: B60K 15/03, B60K 15/04, B29C 45/14

(54) **Fuel system**

(30) Priority: 20.04.2010 US 326090 P
(71) Applicant: Gamble, Jimmy D., Connersville, IN 47331 (US); Heindl, Matthew, Eaton, OH 45320 (US); Crawford, Jason M., Connersville, IN 47331 (US)
(72) Inventor: Gamble, Jimmy D., Connersville, IN 47331 (US); Heindl, Matthew, Eaton, OH 45320 (US); Crawford, Jason M., Connersville, IN 47331 (US)
(74) Representative: Algemeen Octrooi- en Merkenbureau

(57) **Abstract**

The present invention provides, a fuel system comprising
a fuel-delivery control unit including a valve mount adapted to be coupled to and interconnect a fuel tank and a fuel tank filler neck, the valve mount being formed to include a fuel-delivery channel arranged to conduct liquid fuel and fuel vapor between an interior region formed in the fuel tank and a passageway formed in the fuel tank filler neck, the fuel-delivery control unit further including an inlet check valve positioned to lie in the fuel-delivery channel and configured to regulate flow of liquid fuel through the fuel-delivery channel between the fuel tank and the fuel tank filler neck, wherein the valve mount includes a shell made of a weldable plastics material and a fuel-vapor blockade insert encapsulated in the shell and made of a material that is impermeable to flow of fuel vapor.

## Description

### BACKGROUND

The present invention relates to a fuel tank valve assembly, and particularly to a fuel tank valve assembly that is suitable for use with a fuel tank having an exterior skin made of a polymeric material. More particularly, the present invention relates to a valve assembly having a mount adapted to be welded to the fuel tank to mount the valve in a fixed position in an aperture formed in the fuel tank.

### SUMMARY

The present invention provides a fuel-delivery control system for regulating flow through a filler neck into a fuel tank. The system includes a valve mount coupled to the fuel tank and formed to include a fuel-delivery channel and an inlet check valve positioned to lie in the fuel-delivery channel.

In illustrative embodiments, the valve mount includes a fuel-vapor blockade insert made of a material that is impermeable to flow of fuel vapor and encapsulated in a shell. The shell is made of a plastics material that can be welded to the fuel tank to retain the valve mount in a stationary position on the fuel tank. The fuel-vapor blockade insert is positioned to lie very close to an impermeable inner tank layer included in the fuel tank to provide means for minimizing flow of fuel vapor from the fuel tank to the surroundings through a channel that is formed between the fuel-vapor blockade insert and the impermeable inner tank layer and filled with weldable plastics material included in an outer tank layer of the fuel tank that is welded to the shell of the valve mount so that unwanted discharge of fuel vapor from the fuel tank to the surroundings past the valve mount is minimized.

The present invention also provides a fuel system comprising
a fuel tank and
a fuel-delivery control unit including a valve mount coupled to the fuel tank and formed to include a fuel-delivery channel and an inlet check valve positioned to lie in the fuel-delivery channel and to regulate flow of liquid fuel through a filler neck into a fuel tank, the valve mount including a fuel-vapor blockade insert made of a material that is impermeable to flow of fuel vapor and encapsulated in a shell, the shell is made of a plastics material that is welded to the fuel tank to retain the valve mount in a stationary position on the fuel tank, the fuel-vapor blockade insert is positioned to lie in close proximity to an impermeable inner tank layer included in the fuel tank to provide means for minimizing flow of fuel vapor from the fuel tank to the surroundings through a channel that is formed between the fuel-vapor blockade insert and the impermeable inner tank layer and filled with wieldable plastics material included in an outer tank layer of the fuel tank that is welded to the shell of the valve mount so that unwanted discharge of fuel vapor from the fuel tank to the surroundings past the valve mount is minimized.

The present invention alos provides a fuel system comprising
a fuel tank,
a fuel tank filler neck, and
a fuel-delivery control unit including a valve mount and an inlet check valve, the valve mount being coupled to the fuel tank and arranged to extend outwardly in one direction into the fuel tank filler neck and inwardly in an opposite direction into an interior region of the fuel tank through an inlet formed in the fuel tank, the inlet check valve being located in a fuel-delivery channel formed in the valve mount to communicate with the interior region of the fuel tank and configured to close the fuel-delivery channel normally until a sensor included in the inlet check valve is exposed to liquid flowing through the fuel tank filler neck through the fuel-delivery channel toward the interior region of the fuel tank and a fuel-conducting passageway formed in the fuel tank filler neck, wherein the valve mount includes a shell having a conduit providing the fuel-delivery channel and a conduit anchor coupled to the conduit and to the fuel tank to support a lower portion of the conduit in the inlet formed in the fuel tank, the valve mount further including a fuel-vapor blockade insert disposed in the shell, and the fuel tank including an outer tank layer made of a wieldable plastics material and coupled to the conduit anchor of the shell and an inner tank layer made of a barrier material impermeable to fuel vapor.

Additional features of the present invention will become apparent to those skilled in the art upon consideration of illustrative embodiments exemplifying the best mode of carrying out the invention as presently perceived.

### BRIEF DESCRIPTION OF THE DRAWINGS

The detailed description particularly refers to the accompanying figures in which:

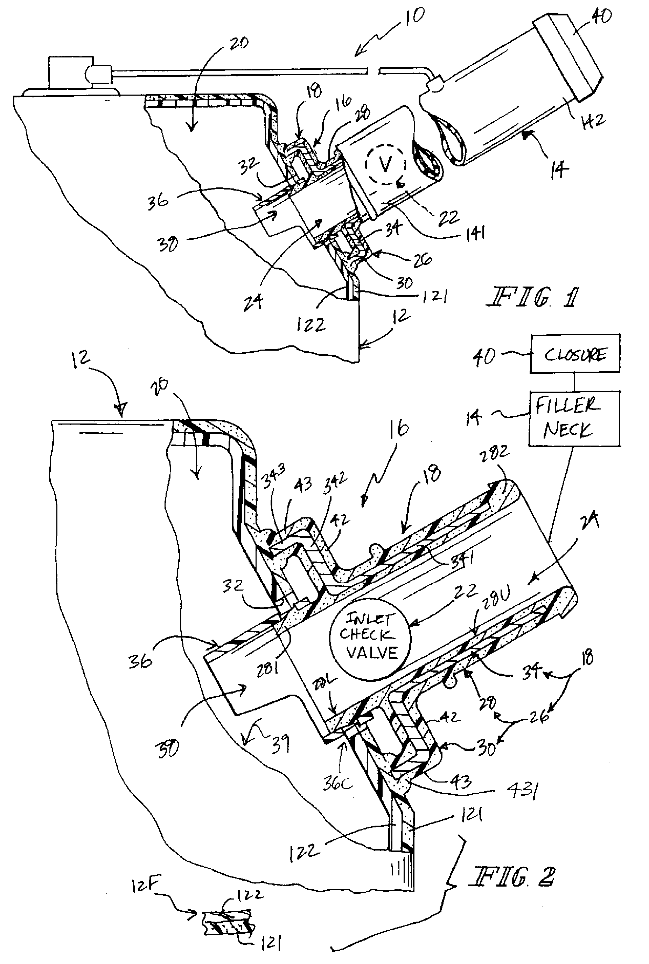

Fig. 1 is a partial side elevational view of a portion of a vehicle fuel system with portions broken away to show a fuel-delivery control unit positioned in a fuel tank filler neck at an inlet opening into an interior region formed in a vehicle fuel tank;

Fig. 2 is an enlarged view of the fuel-delivery control unit of Fig. 1 with portions broken away to show a valve mount comprising a shell made of a weldable plastics material and a fuel-vapor blockade insert disposed in the shell and showing that the shell includes a conduit that is formed to include a fuel-delivery channel communicating with the interior region of the vehicle fuel tank and containing an inlet check valve providing means for normally closing the fuel-delivery channel until a sensor included in the inlet check valve is exposed to liquid fuel flowing from the filler neck through the fuel-delivery channel toward the interior region of the fuel tank and showing that the shell further includes an outwardly extending conduit anchor coupled to an exterior surface of the conduit and formed to include an annular weld pad that is coupled to the fuel tank (e.g., by welding) to support the conduit in the inlet formed in the fuel tank;

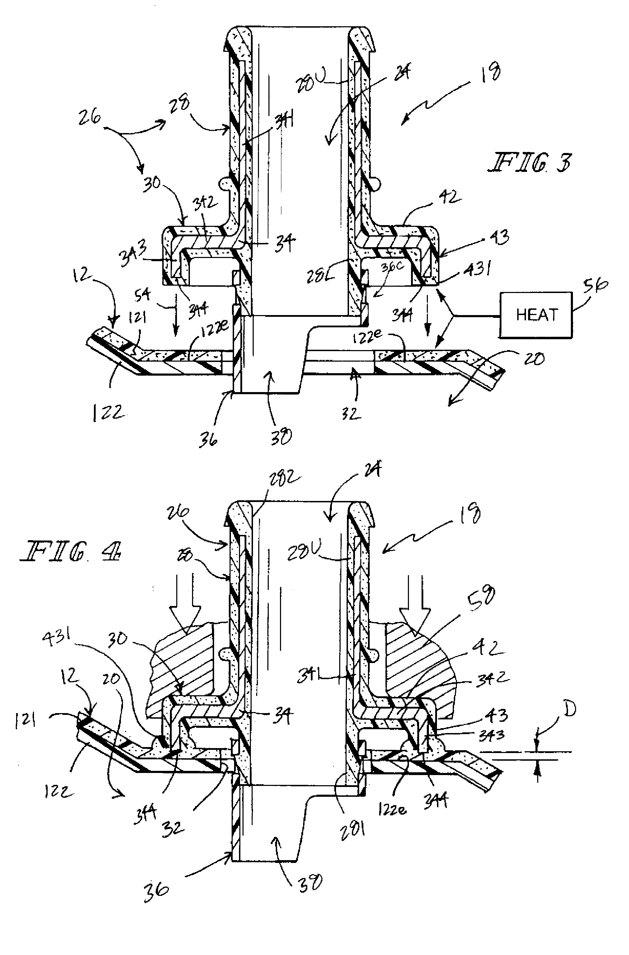

Fig. 3 is an enlarged partial sectional view of the valve mount of Figs. 1 and 2 and a side wall of the fuel tank before they are mated showing that an illustrative fuel tank side wall includes an outer tank layer made of a weldable plastics material and an inner tank layer made of a barrier material that is impermeable to flow of fuel tank vapor;

Fig. 4 is a view similar to Fig. 3 showing that a weld pad made of high-density polyethylene (HDPE) and included in the conduit anchor of the shell has been mated with and welded to the outer tank layer (also made of HDPE) of the fuel tank to anchor the valve mount of the fuel-delivery control unit in the inlet formed in the side wall of the fuel tank;

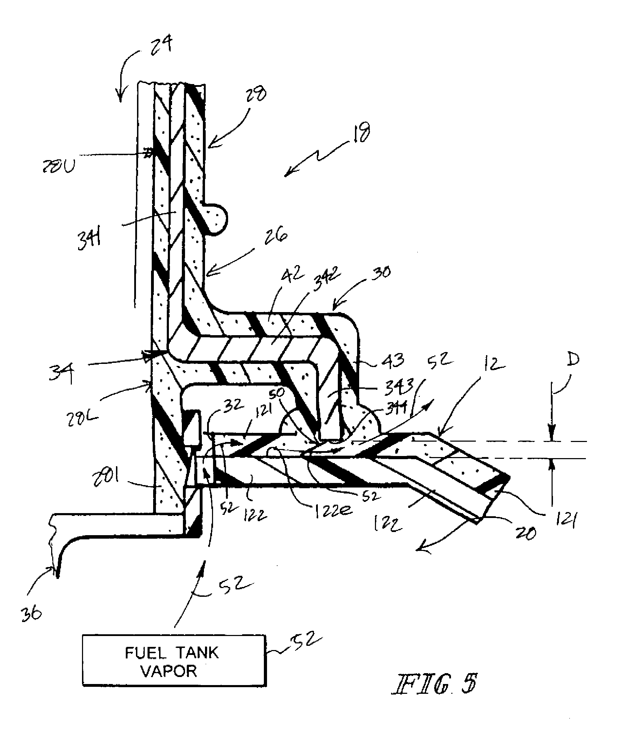

Fig. 5 is an enlarged view of a portion of the vehicle fuel system shown in Fig. 4 and showing that the fuel tank includes an outer tank layer made of a weldable plastics material such as HDPE and an inner tank layer made of an impermeable barrier material configured to block flow of liquid fuel and fuel vapor therethrough and showing that the weld pad of the conduit anchor is coupled to the outer tank layer to minimize a distance between a lower edge of the fuel-vapor blockade insert and a top surface of the inner tank layer to inhibit any flow of fuel vapor from the interior region of the fuel tank to the surroundings through a space provided between the lower edge of the fuel-vapor blockade insert and the top surface of the inner tank layer and filled with HDPE plastics material;

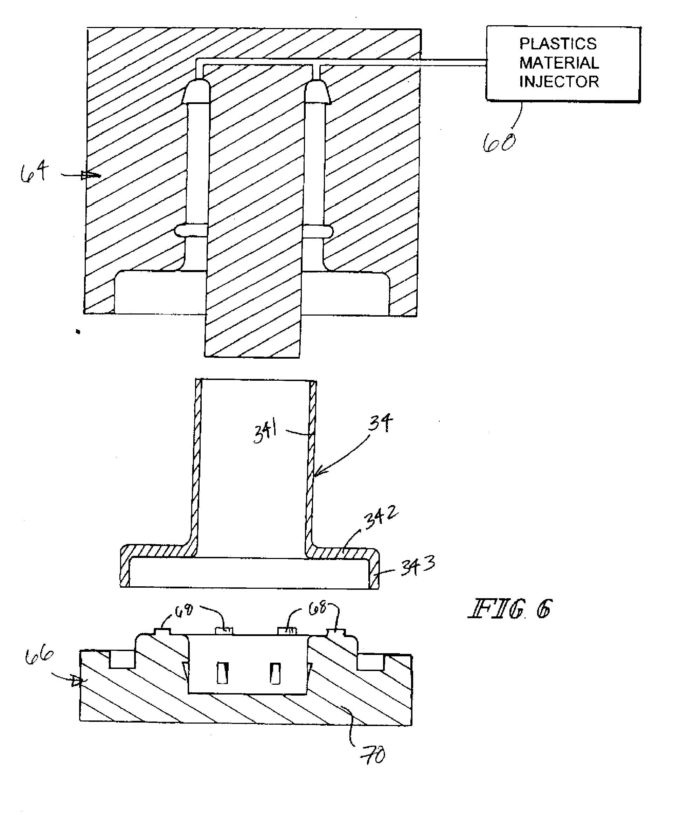

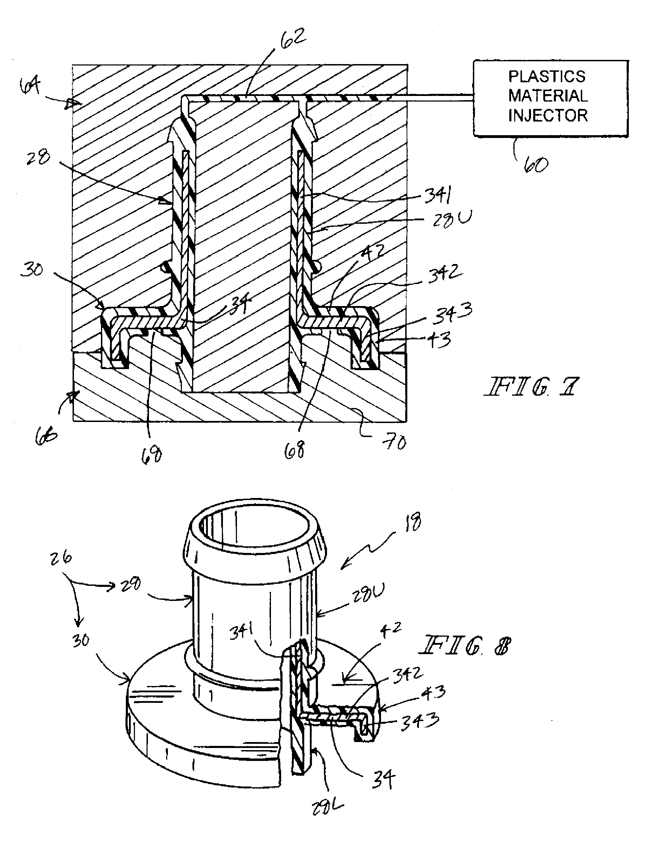

Fig. 6 is a diagrammatic sectional view of a plastic injection mold having an upper mold portion and a lower mold portion, here shown spaced apart in an opened position, and showing a fuel-vapor blockade insert made of a metal impermeable to liquid fuel and fuel vapor located between the upper and lower mold portions and adapted to set on an insert carrier formed in a central region of the lower mold portion (as suggested in Fig. 7) prior to closing the mold and injecting an HDPE plastics material into a mold cavity formed in the upper and lower mold portions (in the manner shown in Fig. 7);

Fig. 7 is a sectional view similar to Fig. 6 showing the upper and lower mold portions in a closed position after the HDPE plastics material has been injected into the mold cavity through a channel formed in the upper mold portion so as to overmold the HDPE plastics material onto the metal fuel-vapor blockade insert to encapsulate the insert in a shell made of the HDPE plastics material;

Fig. 8 is a perspective view of the valve mount produced in the plastic injection mold of Fig 7 with portions broken away to show a portion of the metal fuel-vapor blockade insert encapsulated in the HDPE shell and before an inlet check valve is mounted in the fuel-delivery channel formed in the shell;

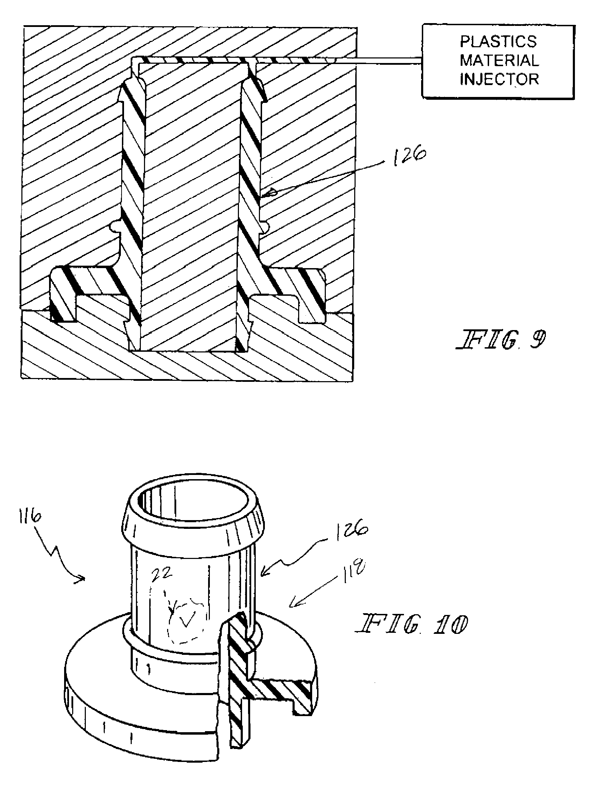

Fig. 9 is a plastic injection mold similar to the mold shown in Fig. 7 except that it is not configured to receive and support a fuel-vapor blockade insert in the mold cavity; and

Fig. 10 is a perspective view of the valve mount made in accordance with another embodiment of the present invention and produced in the plastic injection mold of Fig. 9 with portions broken away to show that the valve mount is monolithic.

A fuel system 10 for use with a vehicle is shown in Fig. 1. Fuel system 10 includes a fuel tank 12, a filler neck 14, and a fuel-delivery control unit 16 comprising a valve mount 18 coupled to fuel tank 12 and arranged to extend outwardly in one direction into filler neck 14 and inwardly in an opposite direction into an interior region 20 of fuel tank 12 and an inlet check valve (V) 22 located in a fuel-delivery channel 24 formed in valve mount 18 as suggested in Figs. 1 and 2. Valve mount 18 includes a shell 26 having a conduit 28 providing fuel-delivery channel 24 and a conduit anchor 30 coupled to fuel tank 12 to support conduit 28 in an inlet 32 formed in fuel tank 12. A fuel-vapor blockade insert 34 is included in valve mount 18 and disposed in shell 26 as suggested in Figs. 1-5 in accordance with a first embodiment of the present invention using an illustrative overmolding process suggested in Figs. 6-7 and is omitted from shell 126 of a fuel-delivery control system 116 as suggested in Figs. 9 and 10 to produce a valve mount 118 in accordance with another embodiment of the present invention.

Fuel tank 12 includes an outer tank layer 121 and an inner tank layer 122 coupled to an interior surface of outer tank layer 121 as shown, for example, in Figs. 1-5. Outer tank layer 121 is made of a weldable plastics material such as high-density polyethylene (HDPE) in an illustrative embodiment. Inner tank layer 122 is made of an impermeable barrier material configured to define interior region 20 and to provide means for blocking flow of liquid fuel and fuel vapor therethrough from interior region 20 to the surroundings outside of fuel tank 12. An aperture formed in outer tank layer 121 is aligned with an aperture formed in inner tank layer 122 to define fuel tank inlet 32 as suggested in Figs. 1-5.

Shell 26 included in valve mount 18 is made of a weldable plastics material such as HDPE in an illustrative embodiment. Shell 26 is adapted to be coupled, for example, using a welding process, to outer tank layer 121 of fuel tank 12 as suggested in Figs. 3 and 4 to extend through fuel tank inlet 32 into interior region 20 and to support inlet check valve 22 located in fuel-delivery channel 24 of shell 26 in fluid communication with interior region 20 of fuel tank 12 as shown, for example, in Fig. 2.

Conduit 28 of shell 26 includes an inner end 281 arranged to extend through fuel tank inlet 32 into interior region 20 of fuel tank 12 and an outer end 282 positioned to lie outside interior region 20 and in spaced-apart relation to outer tank layer 121 as shown, for example, in Fig. 2. A lower housing 36 included in fuel-delivery control unit 16 is formed to include a flow-discharge passageway 38 and configured to be coupled to inner end 281 using, for example, a snap-on connector 36C as suggested in Figs. 1 and 2 to provide guide means for conducting any liquid fuel (not shown) flowing out of fuel-delivery channel 24 and into flow-discharge passageway 38 in a downward direction 39 toward a floor 12f of fuel tank 12. Outer end 282 of conduit 28 is adapted to mate with an inner end 141 of fuel tank filler neck 14 as shown illustratively in Fig. 1 and diagrammatically in Fig. 2. An outer end 142 of filler neck 14 is configured to be closed temporarily by a removable closure 40 of any suitable kind as suggested in Figs. 1 and 2.

Conduit anchor 30 of shell 26 includes horizontal and vertical rings 42, 43 as suggested in Figs. 2 and 3. Horizontal ring 42 is coupled to an exterior surface of conduit 28 and is arranged to surround and extend laterally away from conduit 28 as suggested in Fig. 3. Vertical ring 43 is coupled to a peripheral portion of horizontal ring 42 and is arranged to surround a lower portion 281 of conduit 28 and lie in concentric relation to lower portion 28L as suggested in Fig. 3. An annular free end 431 of vertical ring 43 provides a weld pad that is adapted to mate with outer tank layer 121 of fuel tank 12 as suggested in Fig. 2 and 3 to cause lower portion 28L of conduit 28 to extend through fuel through fuel tank inlet 32 and to suspend inner end 281 of conduit 28 and housing 36 in interior region 20 of fuel tank 12.

In illustrative embodiments, a fuel-vapor blockade insert 34 is included in valve mount 18 of fuel-delivery control unit 16 and disposed (for example, encapsulated) in shell 26 as suggested in Figs. 1-4. Fuel-vapor blockade insert 34 is made an impermeable barrier material such as a metal that is configured to provide means for blocking flow of liquid fuel and fuel vapor therethrough.

Fuel-vapor blockade insert 34 includes a cylindrical upper sleeve 341 having a first diameter, a cylindrical lower sleeve 343 having a relatively greater second diameter, and an annular disk 342 extending laterally and radially and interconnecting a lower end of upper sleeve 341 and an upper end of lower sleeve 343 as suggested in Figs. 2-4. In illustrative embodiments, upper sleeve 341 is encapsulated in an upper portion 28U of conduit 28, annular disk 342 is encapsulated in horizontal ring 42 of conduit anchor 30, and lower sleeve 343 is encapsulated in vertical ring 43 of conduit anchor 30 and terminates at bottom surface 344 as shown, for example, in Figs. 2-5.

Bottom surface 344 of lower sleeve 343 of fuel-vapor blockade insert 34 and exterior surface 122e of inner tank layer 122 cooperate to define an annular channel 50 of height D therebetween as suggested in Fig. 5. As suggested in Fig. 5, in an illustrative embodiment, the entire annular channel 50 is filled with plastics material (for example, HDPE) included in outer tank layer 121. Fuel-vapor blockade insert 34 is located relative to exterior surface 122e of inner tank layer 122 to minimize or eliminate distance D so that the height of annular channel 50 is as small as possible to restrict any outbound flow of fuel vapor 52 from interior region 20 of fuel tank 12 to the atmosphere surrounding fuel-delivery control unit 16 that has passed through the vapor-permeable material comprising outer tank layer 121 that lies in annular channel 50. In illustrative embodiments, such outbound fuel vapor flow permeating outer tank layer 121 and flowing through annular channel 50 is minimized and in compliance with certain applicable governmental regulations so as to reduce permeation of fuel vapor 52 from interior region 20 of fuel tank 12 to the atmosphere surrounding fuel tank 12.

A lower portion of vertical ring 43 of conduit anchor 30 provides a weld pad 431 that is adapted to be coupled to fuel tank 12 (as by, for example, welding) at fuel tank inlet 32 as suggested in Figs. 3 and 4. A hot-plate (or other suitable) welding process can be used, for example, to couple the annular weld pad 43 of vertical ring 43 of conduit anchor 30 to outer tank layer 121 of fuel tank to provide an annular low-permeation joint therebetween to minimize unwanted fuel vapor leakage therebetween. It is within the scope of the present invention to make that weld pad 431 of any suitable material that can be welded or otherwise coupled to outer tank layer 121 of fuel tank 12 to provide a substantially sealed connection therebetween.

Using an illustrative technique, the annular weld pad 431 established by the lower portion of vertical ring 43 is moved downwardly in direction 54 as suggested in Fig. 3 to contact an exterior surface 121e of outer tank layer 121 of fuel tank 12. Annular weld pad 431 and outer tank layer 121 are heated during a welding operation. After treating both surfaces 121e and 431 with heat 56 during a conductive heat-transfer process, as suggested in Fig. 3, the two surfaces 121e and 431 are pressed together using, for example, a downwardly moving shell mover 58 to form a sealed weld joint and locate bottom surface 344 of lower sleeve 343 of fuel-vapor blockade insert 34 at distance D from exterior surface 122e of inner tank layer 122.

One illustrative method of disposing (for example, encapsulating) fuel-vapor blockade insert 34 in shell 26 to produce valve mount 18 is illustrated in Figs. 6-8. A plastics material injector 60 is used to introduce a weldable plastics material 62 (for example, HDPE) into a mold cavity containing fuel-vapor blockade insert 34 and defined in upper and lower mold portions 64, 66 to overmold shell 26 onto fuel-vapor blockade insert 34. A series of circumferentially spaced-apart upstanding insert-support pins 68 are coupled to an underlying block 70 to define an insert carrier on block 70 and to provide lower mold portion 66. Pins 68 are configured to provide insert-carrier means for supporting fuel-vapor blockade insert 34 in an elevated position in the mold cavity as suggested in Fig. 7 during discharge of weldable plastics material 62 into the mold cavity to form bottom surface 344 and other underside portions of horizontal and vertical rings 42, 43 of conduit anchor 30 of shell 26.

A pre-mold insert 34 is located strategically within shell 26 and geometry of weld pad 43 is selected to minimize any full-vapor permeable area (for example, annular channel 50) after valve mount 18 is welded to fuel tank 12. A mechanical lock is provided between shell 26 and insert 34 arising out of the overmold design disclosed herein. It is within the scope of this invention to surface treat insert 34 to provide a chemical bond between shell 26 and insert 34. By forming a shell 126 with an insert 34 to produce a valve mount 118 as suggested in Figs. 9 and 10, a low-cost governmental LEVEL I-compliant fuel-delivery control unit 116 is provided.

In accordance with the present invention, no additional components or secondary processes to fuel-delivery control system 16 are needed to cause system 16 to comply with governmental LEVEL III regulations (i.e., sulfination, exotic materials, two-shot process, etc.). Fuel tank suppliers are not required to use any secondary process on fuel tanks coupled to system 16 to achieve LEVEL III compliance.

As disclosed herein, providing an insert 34 extending into weld pad 431 ensures that height D (representative of permeable cross-sectional area of annular channel 50) will be minimized or eliminated during the welding process as bottom surface 344 of lower sleeve 43 of insert 34 is located very near to or in contact with exterior surface 122e of inner tank layer 122 of fuel tank 12 as suggested in Figs. 4 and 5. With insert 34 being strategically placed within weld pad 431, the weld strength between valve mount 18 and fuel tank 12 will be maximized. In this welding process, bottom surface 344 of insert 34 is forced to make or nearly make contact with the permeation barrier established in fuel tank 12 by inner tank layer 122 to remove any hydrocarbon leak path therebetween or to provide a more stringent hydrocarbon leak path through annular channel 50 in compliance with governmental LEVEL III regulations.

## Claims

1. A fuel system comprising
a fuel-delivery control unit including a valve mount adapted to be coupled to and interconnect a fuel tank and a fuel tank filler neck, the valve mount being formed to include a fuel-delivery channel arranged to conduct liquid fuel and fuel vapor between an interior region formed in the fuel tank and a passageway formed in the fuel tank filler neck, the fuel-delivery control unit further including an inlet check valve positioned to lie in the fuel-delivery channel and configured to regulate flow of liquid fuel through the fuel-delivery channel between the fuel tank and the fuel tank filler neck, wherein the valve mount includes
a shell made of a weldable plastics material and
a fuel-vapor blockade insert encapsulated in the shell and made of a material that is impermeable to flow of fuel vapor.

2. The fuel system of claim 1, wherein the shell includes a conduit that is formed to include the fuel-delivery channel and an outwardly extending conduit anchor coupled to the conduit and adapted to be coupled to the fuel tank.

3. The fuel system of claim 2, wherein the fuel-vapor blockade insert is disposed in each of the conduit and the conduit anchor.

4. The fuel system of claim 2 or 3, wherein the fuel-vapor blockade insert includes an upper sleeve, a lower sleeve, and an annular disk extending laterally away from the upper sleeve to mate with the upper sleeve, the upper sleeve is disposed in the conduit, and the lower sleeve and disk are disposed in the conduit anchor.

5. The fuel system of claim 2, 3 or 4 wherein the conduit of the shell includes an outer end adapted to mate with the fuel tank filler neck and an opposite inner end and the conduit anchor includes a horizontal ring coupled to an exterior surface of a middle portion of the conduit located between the inner and outer ends thereof and a vertical ring coupled to a peripheral portion of the horizontal ring and arranged to surround and lie in spaced-apart relation to a lower portion of the conduit located between the middle portion and the inner end of the conduit.

6. The fuel system of claim 5, wherein the fuel-vapor blockade insert is disposed in each of the horizontal ring and the vertical ring of the conduit anchor and in an upper portion of the conduit located between the outer end and the middle portion of the conduit.

7. The fuel system of claim 1, further comprising a fuel tank formed to include an inlet opening into the interior region, an inner tank layer made of an impermeable barrier material surrounding the interior region and configured to provide means for blocking flow of liquid fuel and fuel vapor therethrough from the interior region to surroundings outside of the fuel tank, and an outer tank layer made of a weldable plastics material compatible and configured to merge with the weldable plastics material of the shell of the valve mount during a welding operation to unite the shell and the outer tank layer to fix the valve mount in a stationary position on the fuel tank, and wherein an aperture formed in the outer tank layer is aligned with an aperture formed in the inner tank layer to define the inlet opening of the fuel tank, and the shell is positioned to lie in a stationary position relative to the outer tank layer to cause the fuel-vapor blockade insert in the shell to lie in close proximity to the inner tank layer to provide means for minimizing flow of fuel vapor from the fuel tank to the surroundings through a channel that is formed between the fuel-vapor blockade insert and the inner tank layer and that is filled with weldable plastics material included in at least one of the outer tank layer and the shell so that unwanted discharge of fuel vapor from the interior region of the fuel tank to the surroundings past the valve mount is minimized.

8. The fuel system of claim 7, wherein the shell includes a conduit that is formed to include the fuel-delivery channel and an outwardly extending conduit anchor coupled to the conduit and formed to include an annular weld pad that is coupled to the outer tank layer of the fuel tank to support the conduit in the inlet formed in the fuel tank to place the fuel-delivery conduit in fluid communication with the interior region of the fuel tank.

9. The fuel system of claim 8, wherein the fuel-vapor blockade insert includes an upper sleeve, a lower sleeve having a bottom surface, and a disk extending laterally away from the upper sleeve to mate with the lower sleeve, the upper sleeve is disposed in the conduit, the disk and the lower sleeve are disposed in the conduit anchor, and a bottom surface of the lower sleeve cooperates with a top surface of the inner tank layer to define the channel therebetween.

10. The fuel system of claim 8 or 9, wherein the conduit of the shell includes an inner end arranged to extend through the inlet opening of the fuel tank into the interior region of the fuel tank and an outer end arranged to lie outside of the interior region of the fuel tank and in spaced-apart relation to the outer tank layer and adapted to mate with the fuel tank filler neck.

11. The fuel system of claim 8, 9 or 10, wherein the conduit anchor of the shell includes a horizontal ring coupled to an exterior surface of the conduit and arranged to surround and extend laterally away from the conduit and a vertical ring coupled to a peripheral portion of the horizontal ring and arranged to surround and lie in spaced-apart relation to a lower portion of the conduit, and a free end of the vertical ring provides the annular weld pad.

12. The fuel system of claim 11, wherein the fuel-vapor blockade insert includes an upper sleeve disposed in the conduit, a lower sleeve disposed in the vertical ring of the conduit anchor, and an annular disk disposed in the horizontal ring of the conduit anchor and arranged to interconnect the upper and lower sleeves.

13. The fuel system of claim 7, wherein the shell includes a vertical ring coupled to the outer tank layer, the fuel-vapor blockade insert includes a lower sleeve having a bottom surface, and the lower sleeve is disposed in the vertical ring to locate the bottom surface in spaced-apart relation to a top surface of the inner tank layer to define the channel therebetween.

14. The fuel system of claim 13, wherein the shell further includes a conduit that is formed to include the fuel-delivery channel and a horizontal ring coupled to an exterior surface of the conduit and an upper portion of the vertical ring and arranged to surround and extend laterally away from the conduit, the horizontal and vertical rings of the shell cooperate to form a conduit anchor arranged and configured to support the conduit in the inlet formed in the fuel tank, and the fuel-vapor blockade insert further includes an upper sleeve disposed in the conduit and a disk disposed in the horizontal ring of the shell and arranged to extend laterally away from the upper sleeve to mate with the lower sleeve, peferably the upper sleeve being cylindrical and having a first diameter, the lower sleeve being cylindrical and having a relatively greater diameter, and the disk being annular.

15. The fuel system of claim 14, wherein the conduit of the shell includes an inner end arranged to extend through the inlet of the fuel tank into the interior region of the fuel tank and an outer end arranged to lie outside of the interior region of the fuel tank and in spaced-apart relation to the outer tank layer and adapted to mate with a fuel tank filler neck, and further comprising a lower housing formed to include a flow-discharge passageway and configured to be coupled to the inner end of the conduit, preferably by means of a snap-on connector to provide guide means for conducting any liquid fuel flowing out of the fuel-delivery channel and into the flow-discharge passageway in a downward direction into the interior region of the fuel tank and toward a floor of the fuel tank, preferably the lower housing being made of a plastics material that is different from weldable plastics material included in the conduit of the shell.
